# EUROPÄISCHE PATENTANMELDUNG

(11) **EP 0 708 430 A2**
(43) Veröffentlichungstag der Anmeldung: **24.04.1996**
(21) Anmeldenummer: 95202721.7
(22) Anmeldetag: 10.10.1995
(51) Int. Cl.: G09G 1/16, H04N 5/44

(54) **Breitbilderanzeigevorrichtung, die Bilder mit einem abweichenden Seitenverhältnis anzeigen kann**

(30) Priorität: 18.10.1994 DE 4437150
(71) Anmelder: Philips Patentverwaltung GmbH, D-22335 Hamburg (DE); Philips Electronics N.V., NL-5621 BA Eindhoven (NL)
(72) Erfinder: Ribback, Rainer, c/o Philips Patentverwaltung GmbH, D-22335 Hamburg (DE); Dreier, Hans-Joachim, Dr., c/o Philips, D-22335 Hamburg (DE); Lentzer, Axel, c/o Philips Patentverwaltung GmbH, D-22335 Hamburg (DE)
(74) Vertreter: von Laue, Hanns-Ulrich, Dipl.-Ing.

(57) **Zusammenfassung**

Bei einer Bildwiedergabeanordnung zur Darstellung eines Bildsignales, dessen Breiten- /Höhen- Verhältnis von dem Breiten- /Höhen- Verhältnis eines Bildwiedergabeschirmes abweicht, wobei das Bildsignal zur Darstellung auf dem Bildwiedergabeschirm in der Weise komprimiert wird, daß die Darstellung des Bildsignales in dessen Breiten- /Höhen- Verhältnis erfolgt, sind zur kompatiblen Darstellung des Bildsignales Mittel vorgesehen, die die dabei nicht mit Bildinhalt des Bildsignals belegten Bereiche des Bildwiedergabeschirmes mit einem Ersatzsignal belegen, das durch zeitliche Integration der Differenz aus dem Bildsignal und aus dessen Klemmwert gewonnen wird.

## Beschreibung

Die Erfindung betrifft eine Bildwiedergabeanordnung zur Darstellung eines Bildsignales, dessen Breiten- /Höhen- Verhältnis von dem Breiten- /Höhen- Verhältnis eines Bildwiedergabeschirmes abweicht, wobei das Bildsignal zur Darstellung auf dem Bildwiedergabeschirm in der Weise komprimiert wird, daß die Darstellung des Bildsignales in dessen Breiten- /Höhen- Verhältnis erfolgt.

Bei derartigen Bildwiedergabeanordnungen besteht das Problem, daß Teile der Fläche des Bildwiedergabeschirmes nicht genutzt werden bzw. nicht mit dem Bildsignal belegt sind. Beispielsweise auf einem Bildschirm des Formates 16:9, wie er zunehmend üblich wird, besteht bei der Wiedergabe eines Bildsignals, dessen Bildinhalt ein Breiten- /Höhen- Verhältnis von 4:3 hat, das Problem, daß links und rechts des dargestellten 4:3 Bildsignales ungenutzte Bereiche auf dem Bildwiedergabeschirm verbleiben.

Es ist aus der JP-Kokai 2-104072 für eine derartige Anordnung bekannt, die ungenutzten Bereiche mit einem Signal konstanten Inhalts, beispielsweise konstanter Farbe und Helligkeit, zu belegen. Dies hat jedoch den Nachteil, daß diese Bereiche dadurch gegenüber dem Bildsignal auffallen und somit eher störend wirken. Hinzu kommt, daß die Phosphore dieses Bereiches des Bildwiedergabeschirmes einseitig belastet werden.

Es ist Aufgabe der Erfindung, eine Bildwiedergabeanordnung der eingangs genannten Art anzugeben, bei der diese Nachteile nicht auftreten.

Diese Aufgabe ist erfindungsgemäß dadurch gelöst, daß Mittel vorgesehen sind, die die nicht mit Bildinhalt des Bildsignals belegten Bereiche des Bildwiedergabeschirmes mit einem Ersatzsignal belegen, das durch zeitliche Integration der Differenz aus dem Bildsignal und aus dessen Klemmwert gewonnen wird.

Es wird hierbei also die Differenz aus dem Bildsignal und aus dessen Klemmwert, also dem Schwarzwert des Bildsignals erzeugt. Diese Differenz wird zeitlich aufintegriert. Dieses Integrationssignal wird als Ersatzsignal herangezogen, mit dem diejenigen Bereiche des Bildwiedergabeschirmes belegt werden, die nicht von dem Bildsignal erfaßt werden. In dem oben genannten Beispiel des 16:9 Bildschirmes, auf dem ein 4:3 Bildsignal dargestellt wird, sind dies die Bereiche links und rechts des 4:3 Bildes. Dieses Ersatzsignal hat den Vorteil, daß es sich bezüglich seiner Amplitude an dem Bildsignal orientiert, jedoch nicht dessen Helligkeit erreicht. Es wird somit ein weicher Übergang von den mit dem Ersatzsignal belegten Bereichen des Bildwiedergabeschirmes zu denjenigen Bereichen geschaffen, auf denen der Inhalt des Bildsignals wiedergegeben wird.

Hierbei kann in vorteilhafter Weise, wie gemäß einer Ausgestaltung der Erfindung vorgesehen ist, bei der Erzeugung des Ersatzsignales das Tastverhältnis zwischen Bildinhalt und Austastlücken des Bildsignales berücksichtigt werden. Dies bedeutet im Endeffekt, daß für die Erzeugung des Ersatzsignales das zeitliche Verhältnis zwischen Nutzinhalt und den übrigen Zeiten des Bildinhaltes berücksichtigt wird. Damit wird das Ersatzsignal an verschiedene Bildsignale anpaßbar, die differierende Breiten- /Höhen- Verhältnisse aufweisen.

Zusätzlich kann zur Anpassung des Ersatzsignales, wie gemäß weiterer Ausgestaltung der Erfindung vorgesehen ist, die Amplitude des Ersatzsignales einstellbar sein. Der Benutzer kann somit dieses Ersatzsignal nach seinen subjektiven Wünschen einstellen.

Gemäß einer weiteren Ausgestaltung der Erfindung ist vorgesehen, daß die Mittel die zeitliche Integration anhand der Komponenten-Signale des Bildsignales vornehmen. Diese Komponenten-Signale, bei denen es sich um die RGB oder Y, -(B-Y), -(R-Y) handeln kann, gestatten am einfachsten die Erzeugung des Ersatzsignales.

Da Bildwiedergabegeräte mit einem Bildwiedergabeschirm eines Breiten- /Höhen- Verhältnisses von 16:9 immer üblicher werden, tritt die eingangs genannte Problematik insbesondere für solche Geräte auf, auf denen ja nach wie vor Bildsignale des bisher üblichen Breiten- /Höhen- Verhältnis von 4:3 wiedergegeben werden sollen. Hierzu ist gemäß weiterer Ausgestaltung der Erfindung vorgesehen, daß das Bildsignal ein Breiten- /Höhen- Verhältnis von 4:3 und der Bildwiedergabeschirm ein Breiten- /Höhen- Verhältnis von 16:9 aufweist und daß das Ersatzsignal für die nicht mit dem Bildsignal belegten Bereiche am linken und am rechten Rand des Bildwiedergabeschirmes eingesetzt wird.

Nachfolgend wird ein Ausführungsbeispiel der Erfindung anhand der Zeichnung näher erläutert. Es zeigen:
Fig. 1 eine schematische Darstellung eines Bildwiedergabeschirmes mit einem Breiten- /Höhen- Verhältnis von 16:9 zur Wiedergabe eines Bildsignals mit einem Breiten- /Höhen- Verhältnis von 4:3,
   und
Fig. 2 ein Blockschaltbild einer erfindungsgemäßen Bildwiedergabeanordnung ohne Bildwiedergabeschirm.

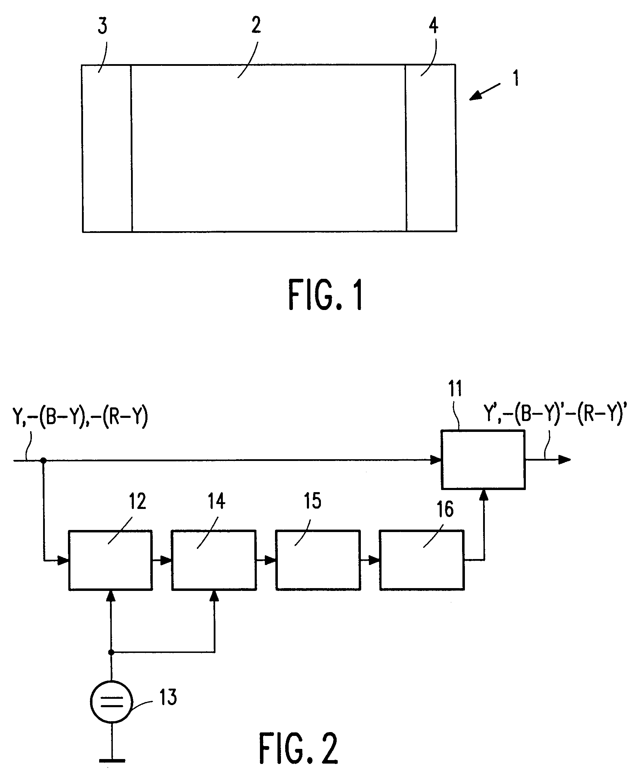

In Fig. 1 ist ein Bildwiedergabeschirm 1 in schematischer Weise dargestellt. Der Bildwiedergabeschirm 1 weist ein Breiten- /Höhen- Verhältnis von 16:9 auf, wie dies für Fernsehgeräte zunehmend üblich wird.

Die Darstellung von Bildsignalen, deren Bildinhalt ein Breiten- /Höhen- Verhältnis von 16:9 hat, ist auf diesem Bildschirm ohne weiteres möglich. Es gibt jedoch noch Bildmaterial, welches ein Breiten- /Höhen- Verhältnis von 4:3 aufweist. Dieses Bildmaterial wird in horizontaler Richtung komprimiert, damit sein Breiten- /Höhen- Verhältnis erhalten bleibt. Dies hat jedoch zur Folge, daß das Bildsignal, dessen Bildinhalt ein Breiten- /Höhen- Verhältnis von 4:3 hat, nur in dem mittleren Bereich 2 des Bildschirmes 1 dargestellt wird. Links und rechts dieses mit dem Bildinhalt des Bildsignals belegten Bereiches 2 verbleiben Randbereiche 3 und 4, die mit keinem Bildinhalt belegt sind.

Erfindungsgemäß sollen nun diese Randbereiche 3 und 4 mit einem Ersatzsignal belegt werden, so daß ein weicher Übergang von den Randbereichen 3 und 4 zu dem mit Bildinhalt belegten zentralen Bereich 2 des Bildschirmes 1 gelingt.

In Fig. 2 ist eine Schaltungsanordnung im Blockschaltbild dargestellt, mittels derer ein Ersatzsignal für die Randbereiche des Bildschirmes 1 gemäß Fig. 1 erzeugt werden kann.

Der Schaltungsanordnung gemäß Fig. 2 werden eingangsseitig die Komponenten beispielsweise eines 4:3 Bildsignales zugeführt. Bei diesen Komponenten kann es sich um die Signale rot, grün, blau (RGB) oder um die Signale Y, -(B-Y), -(R-Y) handeln. Diese Signale werden einerseits einem sogenannten 16:9 Kompressor 11 zugeführt, welcher das Bildsignal, dessen Bildinhalt ein Breiten- /Höhen- Verhältnis von 4:3 hat, in der Weise komprimiert, daß es in horizontaler Richtung entsprechend der Darstellung in Fig. 1 nur einen Teil des Bildschirmes einnimmt. Geschähe dies nicht, so würde das Bildmaterial mit dem Breiten- /Höhen- Verhältnis von 4:3 flächendeckend auf dem 16:9-Bildwiedergabeschirm dargestellt, so daß es verzerrt dargestellt werden würde.

Die der Schaltungsanordnung gemäß Fig. 2 eingangsseitig zugeführten Komponenten des 4:3 Bildsignales gelangen außerdem an eine Klemmschaltung 12, mittels derer das Bildsignal auf eine Amplitude geklemmt wird, die von einer Klemmreferenz 13 geliefert wird. Der Klemmschaltung 12 ist ein Subtrahierer 14 nachgeschaltet, in welchem die Differenz aus dem in der Klemmschaltung 12 auf den Klemmreferenzwert geklemmten Bildsignal einerseits und dem Klemmreferenzsignal andererseits gebildet wird. Diese Differenz wird einem Integrator 15 zugeführt, in dem dieses Signal zeitlich aufintegriert wird. Dieses integrierte Signal gelangt über einen Verstärker 16 an den 16:9 Kompressor 11, in dem dieses Ersatzsignal, das von dem Verstärker 16 geliefert wird, in der Weise mit dem 4:3 Bildsignal vermischt wird, daß in der Darstellung gemäß Fig. 1 die seitlichen Randbereiche 3 und 4 mit dem Ersatzsignal und der zentrale Bereich 2 mit dem 4:3 Bildsignal am Ausgang des 16:9 Kompressors erscheint und für die Darstellung auf einem Bildwiedergabeschirm entsprechend Fig. 1 geeignet ist.

Durch die Schaltung gemäß Fig. 2 wird erreicht, daß die Randbereiche 3 und 4 mit einem Bildsignal beaufschlagt werden, das sich laufend dem Bildinhalt des in dem zentralen Bereich 2 dargestelten Bildes anpaßt und das somit einen weichen Übergang von den Randbereichen 3 und 4 zum zentralen Bildbereich 2 bietet.

## Patentansprüche

1. Bildwiedergabeanordnung zur Darstellung eines Bildsignales, dessen Breiten- /Höhen- Verhältnis von dem Breiten- /Höhen- Verhältnis eines Bildwiedergabeschirmes abweicht, wobei das Bildsignal zur Darstellung auf dem Bildwiedergabeschirm in der Weise komprimiert wird, daß die Darstellung des Bildsignales in dessen Breiten- /Höhen- Verhältnis erfolgt,
dadurch gekennzeichnet, daß Mittel (11, 12, 13, 14, 15) vorgesehen sind, die die nicht mit Bildinhalt des Bildsignals belegten Bereiche des Bildwiedergabeschirmes mit einem Ersatzsignal belegen, das durch zeitliche Integration der Differenz aus dem Bildsignal und aus dessen Klemmwert gewonnen wird.

2. Anordnung nach Anspruch 1,
dadurch gekennzeichnet, daß die Mittel bei der Erzeugung des Ersatzsignales das Tastverhältnis zwischen Bildinhalt und Austastlücken des Bildsignales berücksichtigen.

3. Anordnung nach Anspruch 1 oder 2,
dadurch gekennzeichnet, daß die Amplitude des Ersatzsignales einstellbar ist.

4. Anordnung nach einem der Ansprüche 1 bis 3,
dadurch gekennzeichnet, daß die Mittel die zeitliche Integration eines oder mehrerer Komponenten-Signale des Bildsignales vornehmen.

5. Anordnung nach einem der Ansprüche 1 bis 4,
dadurch gekennzeichnet, daß das Bildsignal ein Breiten- /Höhen- Verhältnis von 4:3 und der Bildwiedergabeschirm ein Breiten- /Höhen- Verhältnis von 16:9 aufweist und daß das Ersatzsignal für die nicht mit dem Bildsignal belegten Bereiche am linken und am rechten Rand des Bildwiedergabeschirmes eingesetzt wird.
